# EUROPEAN PATENT APPLICATION

(11) **EP 4 447 197 A1**
(43) Date of publication of application: **16.10.2024**
(21) Application number: 22903302.2
(22) Date of filing: 01.12.2022
(51) Int. Cl.: H01M 10/613, H01M 10/625, H01M 50/249

(54) **BATTERY COOLING SYSTEM, BATTERY PACK, AND VEHICLE**

(30) Priority: 07.12.2021 CN 202123058099 U
(71) Applicant: Beijing Chehejia Automobile Technology Co., Ltd., Beijing 101300 (CN)
(72) Inventor: LIU, Yangbin, Beijing 101300 (CN)
(74) Representative: Maiwald GmbH
(86) International application number: PCT/CN2022/135971
(87) International publication number: WO 2023/103880

(57) **Abstract**

The present disclosure relates to the technical field of vehicles, and more particularly to a battery cooling system, a battery pack, and a vehicle. The battery cooling system provided by the present disclosure comprises a cross beam, the cross beam is provided with a relief groove, the relief groove extends in the length direction of the cross beam, and the relief groove is used for mounting a cooling assembly.

## Description

### CROSS-REFERENCE TO RELATED APPLICATION

The present application is based on and claims priority to Chinese Patent Application No. 202123058099.5, filed on December 7, 2021, the entire content of which is incorporated herein by reference.

### FIELD

The present disclosure relates to the field of vehicles, and more particularly to a battery cooling system, a battery pack, and a vehicle.

### BACKGROUND

At present, new energy vehicles have increasing energy and power requirements for power batteries, and the heat generation of power battery assemblies is correspondingly increasing. Traditional air cooling technology can no longer meet the requirements of highly integrated power battery assemblies, and liquid cooling solutions have gradually taken over the mainstream. A battery liquid cooling system serves as a key component in a battery pack, and the performance of the battery liquid cooling system will directly affect the thermal management capability of the battery pack.

In a traditional power battery liquid cooling system, collecting tubes are arranged on two sides of a module, sufficient design gaps need to be left, and these gaps will occupy the space of the battery pack.

### SUMMARY

In order to solve the above technical problems or at least partially solve the above technical problems, the present disclosure provides a battery cooling system, a battery pack, and a vehicle.

A first aspect of the present disclosure provides a battery cooling system, including a crossbeam. The crossbeam defines an avoidance groove, the avoidance groove extends in a length direction of the crossbeam, and the avoidance groove is configured to mount a cooling assembly.

In some embodiments, the cooling assembly includes a collecting tube and at least one group of cooling tubes;
the collecting tube extends along the length direction of the crossbeam;
the cooling tube extends along a width direction, and an end of the cooling tube is in communication with the collecting tube; and
the collecting tube is arranged in the avoidance groove, and the cooling tube is coupled to the crossbeam.

In some embodiments, a mounting hole is provided in a side wall of the collecting tube, and the cooling tube is welded to the mounting hole.

In some embodiments, a plurality of cooling tubes are arranged on the collecting tube, and the cooling tubes are parallel to each other and extend along the width direction.

In some embodiments, the cooling tube is a harmonica-shaped tube, an exterior of the harmonica-shaped tube is a flat plate structure, and an interior of the harmonica-shaped tube has a plurality of passages that are spaced apart from each other; and the passage extend along the width direction, and the plurality of passages are spaced apart from each other along a height direction.

In some embodiments, among the plurality of passages spaced apart from each other along the height direction, at least two passages are located above and at least two passages are located below, and ends of the passages located above and the passages located below away from the collecting tube are in communication with each other.

In some embodiments, a support plate is provided in the avoidance groove, the support plate extends along the length direction, and the collecting tube is arranged on the support plate.

In some embodiments, an adapter block is arranged in the avoidance groove, the adapter block is coupled to the crossbeam and the cooling tube, the adapter block is provided with a through hole corresponding to the collecting tube, and the collecting tube passes through the through hole.

In some embodiments, the through hole is a groove arranged in a side of the adapter block close to the collecting tube, a groove opening of the groove is opposite to the collecting tube, and the collecting tube is arranged in the groove through the groove opening of the groove.

In some embodiments, a shape of the groove is matched with a shape of a cross section of the collecting tube.

In some embodiments, the cooling tube includes a mounting section and a cooling section along the width direction, and the mounting section is located in the avoidance groove.

A second aspect of the present disclosure provides a battery pack, including a battery module and the battery cooling system described;
the battery module includes a plurality of battery cells; and
the battery cooling system is configured to cool the battery module.

In some embodiments, a plurality of groups of cooling tubes are spaced apart from each other along a length direction L of the crossbeam, and the battery module is arranged between two adjacent groups of cooling tubes.

A third aspect of the present disclosure provides a vehicle, including the battery pack described.

The battery cooling system provided by embodiments of the present disclosure includes the crossbeam, the crossbeam defines the avoidance groove, the avoidance groove extends in the length direction L of the crossbeam, and the avoidance cross is configured to mount the cooling assembly. After assembly, a part of the cooling assembly may be embedded in the avoidance groove, thus the space in the battery pack is not occupied excessively, the space occupied by the cooling assembly is reduced, and the space utilization of the battery pack is improved.

Furthermore, the battery cooling system has a simple structure, simple assembly, and high assembly efficiency. By embedding a part of the cooling assembly in the avoidance groove, the flattening of the battery pack may be achieved, and the interior space and ground clearance of the vehicle are optimized, so that the battery pack with the battery cooling system has a compact structure, occupies a small space, and has a good lightweight effect and high safety performance. The battery cooling system provided by embodiments of the present disclosure is applied to the battery pack, on the one hand, the longitudinal mounting of the liquid cooling system may be achieved, the height space of the battery pack is saved by more than 10 mm, the contribution to the trafficability, the interior space and the comfort of the vehicle is great, and on the other hand, the space in the battery pack is increased, more power may be carried, and there is more flexibility in vehicle model layout and range design.

### BRIEF DESCRIPTION OF THE DRAWINGS

In order to more clearly explain the technical solution of embodiments of the present disclosure or the related art, the drawings required to be used in the description of embodiments or the related art will be briefly described below, and it is obvious that for those skilled in the art, other drawings may be obtained according to these drawings without creative labor.
FIG. 1 is a schematic diagram of a battery cooling system according to an embodiment of the present disclosure;
FIG. 2 is an exploded view of a battery cooling system according to an embodiment of the present disclosure;
FIG. 3 is a schematic diagram of a crossbeam in a battery cooling system according to an embodiment of the present disclosure;
FIG. 4 is a front view of a battery cooling system according to an embodiment of the present disclosure;
FIG. 5 is a sectional view taken along A-A in FIG. 4.
FIG. 6 is a sectional view taken along B-B in FIG. 4; and
FIG. 7 is a top view of a battery cooling system according to an embodiment of the present disclosure.

References signs: 1 crossbeam; 11 avoidance groove; 111 support plate; 112 adapter block; 2 cooling assembly; 21 collecting tube; 211 liquid inlet; 212 liquid outlet; 22 cooling tube; 221 mounting section; 222 cooling section; 3 fastener.

### DETAILED DESCRIPTION

In order to more clearly understand the purpose, features and advantages of the present disclosure, solutions of the present disclosure will be further described below. It should be noted that embodiments of the present disclosure and the features in embodiments may be combined with each other without conflict.

In order to fully understand the present disclosure, many specific details are explained in the following description, but the present disclosure may also be implemented in other ways different from those described here; obviously, embodiments in the description are only a part of embodiments of the present disclosure, not all of them. A battery pack includes a case and a battery module arranged in the case, the case may be made of aluminum, aluminum alloy or other metal materials, and an accommodating cavity is defined in the case. In some embodiments, the case is a case structure with an opening at its top and includes an upper case cover, a size of the upper case cover is equal to a size of the opening at the top of the case, and the upper case cover may be fixed to the opening by means of a fastener such as a bolt, to define the accommodating cavity. At the same time, in order to improve the tightness of the case, a sealing member may be arranged between the upper case cover and the case.

In some embodiments, the case is provided with a crossbeam 1, and the crossbeam 1 is coupled to the case. One or more battery modules may be accommodated in the accommodating cavity of the case, the battery modules may be arranged side by side along a length direction of the battery pack or along a width direction W of the battery pack in the case, and each of the battery modules is fixed with the case.

In some embodiments, the battery module includes a plurality of battery cells and a frame structure. The battery cell may be a secondary battery that may be repeatedly charged and discharged, the plurality of battery cells are stacked with each other, and a stacking direction may be a length direction, a width direction, or a height direction.

The battery cell includes a housing, the housing may has a hexahedral shape, or other shapes, and a containing cavity is defined in the housing configured to contain an electrode assembly and an electrolyte. The housing may include a metal material, such as aluminum or aluminum alloy, etc., and may also include an insulating material, such as a plastic and the like.

In a traditional power battery liquid cooling system, collecting tubes 21 are arranged on two sides of a module, sufficient design gaps needs to be left, and these gaps will occupy the space of the battery pack, reducing the energy density of the battery pack.

Based on this, embodiments of the present disclosure provide a battery cooling system, a battery pack, and a vehicle, and the mounting space may be saved. After assembly, at least a part of a cooling assembly will be embedded into the crossbeam 1 of a power battery, without excessively occupying the space in the battery pack.

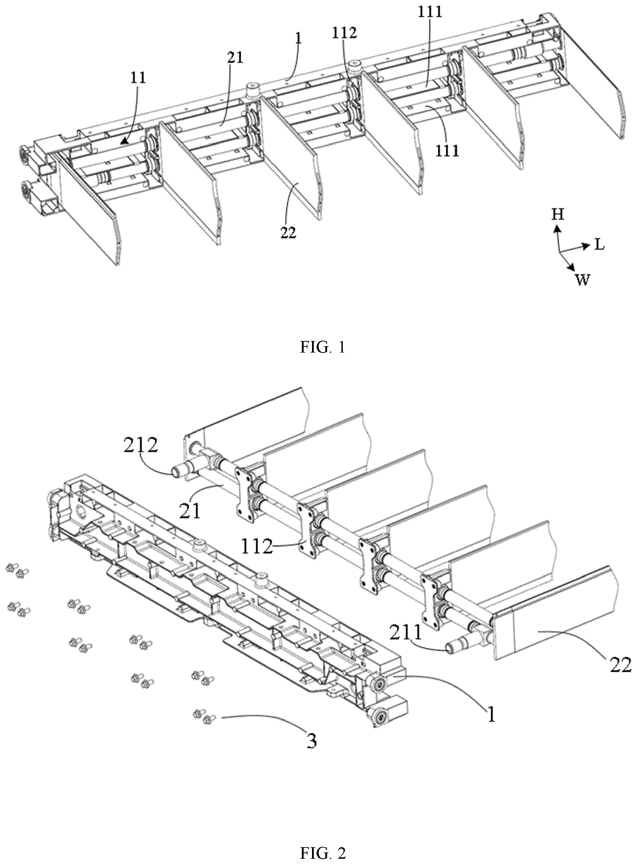

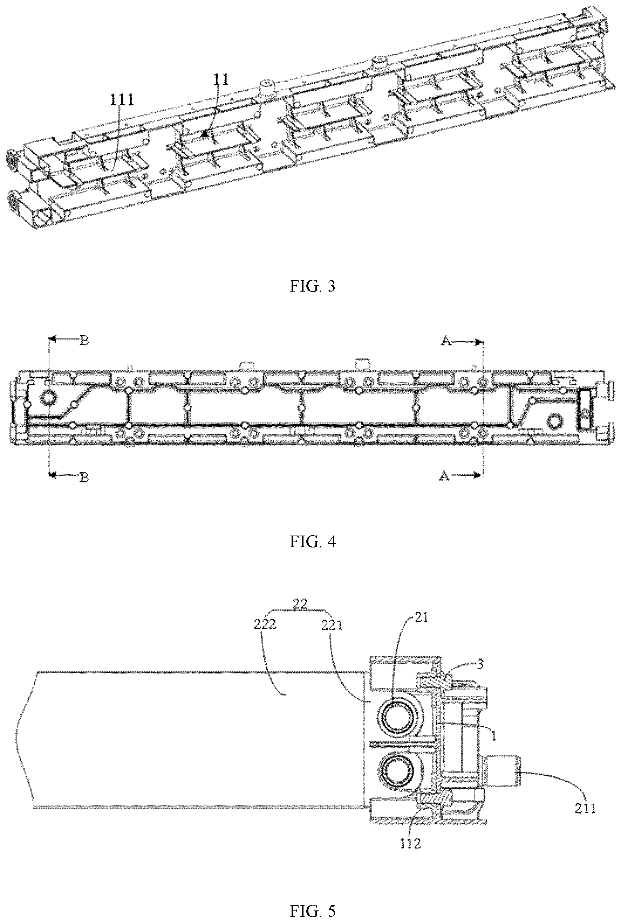

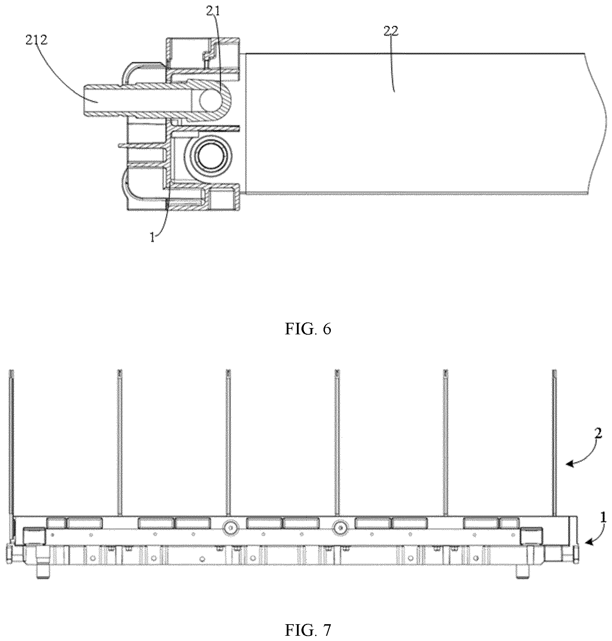

As illustrated in FIGS. 1, 2, 3, 4, 5, 6, and 7, the battery cooling system provided by embodiments of the present disclosure includes a crossbeam 1, the crossbeam 1 defines an avoidance groove 11, the avoidance groove 11 extends in a length direction L of the crossbeam 1, and the avoidance cross 11 is configured to mount a cooling assembly 2. After assembly, a part of the cooling assembly 2 may be embedded in the avoidance groove 11, thus, the space in the battery pack is not occupied excessively, the space occupied by the cooling assembly 2 is reduced, and the space utilization of the battery pack is improved.

Furthermore, the battery cooling system has a simple structure, simple assembly, and high assembly efficiency. By embedding a part of the cooling assembly 2 into the avoidance groove 11, the flattening of the battery pack may be achieved, and the interior space and ground clearance of a vehicle are optimized, so that the battery pack has a compact structure, occupies a small space, and has a good lightweight effect and high safety performance. The battery cooling system provided by embodiments of the present disclosure is applied to the battery pack, on the one hand, the longitudinal mounting of the liquid cooling system may be achieved, a height space of the battery pack is saved by more than 10 mm, the contribution to the trafficability, the interior space and the comfort of the vehicle is great, and on the other hand, since the space in the battery pack is increased, the battery pack may carry more power, and there is more flexibility in vehicle model layout and range design.

In some embodiments, the cooling assembly 2 includes a collecting tube 21 and at least one group of cooling tubes 22. The collecting tube 21 extends along the length direction L of the crossbeam 1, and the cooling tube 22 extends along the width direction W. The collecting tube 21 and the cooling tube 22 define a channel for a coolant to pass through, and an end of the cooling tube 22 is in communication with the collecting tube 21. The collecting tube 21 is arranged in the avoidance groove 11, and the cooling tube 22 is coupled to the crossbeam 1. In some embodiments, the cooling tube 22 is welded with the crossbeam 1. The collecting tube 21 is arranged in the avoidance groove 11, and the collecting tube 21 may be surrounded in the crossbeam 1, which plays a protective role, and prevents the collecting tube 21 from being pressed. In the event of a collision, the possibility of damage to the collecting tube 21 may be reduced. After assembly, the collecting tube 21 may be embedded in the avoidance groove 11, thus the space in the battery pack is not occupied excessively, the space occupied by the cooling assembly 2 is reduced, the structure is simple, the assembly is simple, the assembly efficiency is high, and the contribution to the trafficability, the interior space and the comfort of the vehicle is great. Since the space in the battery pack is increased, the battery pack may carry more power, and there is more flexibility in vehicle model layout and range design.

In some embodiments, a mounting hole may be provided in a side wall of the collecting tube 21, and the cooling tube 22 may be welded to the mounting hole, effectively improving the connection stability between the cooling tube 22 and the collecting tube 21 and enhancing the safety of the battery pack.

There may be one, two, three or more groups of cooling tubes 22. When one group of cooling tubes 22 is provided, the collecting tube 21 is provided with one mounting hole, and the cooling tube 22 is coupled to the mounting hole. When two cooling tubes 22 are provided, the collecting tube 21 is provided with two mounting holes, and the cooling tubes 22 are coupled in one-to-one correspondence to the mounting holes. When three cooling tubes 22 are provided, the collecting tube 21 is provided with three mounting holes, and the cooling tubes 22 are coupled in one-to-one correspondence to the mounting holes, and so on.

In some embodiments, a plurality of cooling tubes 22 are arranged on the collecting tube 21 in the length direction L of the crossbeam 1, and the cooling tubes 22 are parallel to each other and extend along the width direction W.

In some embodiments, the cooling tube 22 may be a harmonica-shaped tube, an exterior of the harmonica-shaped tube is a flat plate structure, and an interior of the harmonica-shaped tube has a plurality of passages spaced apart from each other. The passages extend along the width direction W, the plurality of passages are spaced apart from each other along a height direction H, and simultaneously, the cooling tube 22 is configured to be arranged on a side of the battery cell.

In some embodiments, among the plurality of passages spaced apart from each other along the height direction H, at least two passages are located above and at least two passages are located below, and ends of the passages located above and the passages located below away from the collecting tube 21 are in communication with each other, so that a cooling medium flows into one of the passage located above and the passage located below, and out of the other of the passage located above and the passage located below.

In some embodiments, a support plate 111 is provided in the avoidance groove 11, the support plate 111 extends along the length direction L, the collecting tube 21 is arranged on the support plate 111, and the support plate 111 is configured to support the collecting tube 21, which may prevent the collecting tube 21 from being pressed, improve the stability of the collecting tube 21, and enhance the safety of the battery pack.

In some embodiments, the battery cooling system may include two groups of collecting tubes 21, the two groups of collecting tubes 21 are spaced apart from each other along the height direction H of the crossbeam 1, one of the two groups of collecting tubes 21 may be provided with a liquid inlet 211, and the other of the two groups of collecting tubes 21 may be provided with a liquid outlet 212. In addition, one of the two groups of collecting tubes 21 may be in communication with the passage located above, and the other of the two groups of collecting tubes 21 may be in communication with the passage located below.

When the battery cooling system is in operation, the coolant enters the channel of the collecting tube 21 through the liquid inlet 211, and enters the channel of each of the cooling tubes 22 during the flow along the collecting tube 21. During the flow of the coolant in the cooling tubes 22, the battery cell may be cooled. The circulated coolant is discharged from the battery cooling system through the liquid outlet 212. The heat dissipation effect of the battery cell may be improved, so that the operational environment of the battery cell is more suitable, and the service life of the battery cell is extended.

Since the battery cooling system is arranged on the side of the battery cell, this way does not significantly occupy the height space of the battery pack, reduces the height of the battery pack, and may ensure the ground clearance of the vehicle. By embedding the collecting tube 21 into the avoidance groove 11, the flattening of the battery pack may be achieved, and the interior space and ground clearance of the vehicle are optimized, so that the battery pack has a compact structure, occupies a small space, and has a good lightweight effect and high safety performance. The battery cooling system provided by embodiments of the present disclosure is applied to the battery pack, on the one hand, the longitudinal mounting of the liquid cooling system may be achieved, saving a height space of the battery pack, and on the other hand, since the space in the battery pack is increased, the battery pack may carry more power, and there is more flexibility in vehicle model layout and range design.

When the battery cooling system includes two groups of collecting tubes 21, two support plates 111 are formed in the avoidance groove 11, and each group of collecting tubes 21 is located on the support plate 111, so that the collecting tubes 21 may be prevented from being pressed, and the stability of the collecting tubes 21 may be improved.

Of course, there may also be three or more groups of collecting tubes 21. In order to improve the stability of the collecting tubes 21, the number of support plates 111 is consistent with the number of the collecting tubes 21, and each group of collecting tubes 21 is located on one support plate 111.

In some embodiments, an adapter block 112 is arranged in the avoidance groove 11, the adapter block 112 is coupled to the crossbeam 1 and the cooling tube 22, the adapter block 112 is provided with a through hole corresponding to the collecting tube 21, and the collecting tube 21 passes through the through hole. In some embodiments, the adapter block 112 and the crossbeam 1 may be coupled by welding, and may also be coupled by a fastener 3. In some embodiments, the adapter block 112 is coupled to the crossbeam 1 by the fastener 3, the mounting and disassembly are simple, and the assembly efficiency is high. In some embodiments, the crossbeam 1 may be provided with a mounting hole, the adapter block 112 is provided with a bolt hole, and a bolt passes through the mounting hole and is threaded into the bolt hole.

In some embodiments, the collecting tube 21 abuts against an inner wall of the through hole in the adapter block 112, that is, the collecting tube 21 is arranged on the adapter block 112, so that the adapter block 112 provides a support force for the collecting tube 21, improves the stability of the collecting tube 21, and improves the safety of the battery pack.

In some embodiments, the through hole is a groove arranged in a side of the adapter block 112 close to the collecting tube 21, a groove opening of the groove is opposite to the collecting tube 21, and the collecting tube 21 is arranged in the groove through a groove opening of the groove. A groove wall of the groove may provide a support force for the collecting tube 21, improving the stability of the collecting tube 21 and improving the safety of the battery pack.

In some embodiments, a shape of the groove is matched with a shape of a cross section of the collecting tube 21, and a contact area between the collecting tube 21 and the groove may be increased, so that the collecting tube 21 is in better contact with the adapter block 112, the groove wall of the groove may provide a stable support force for the collecting tube 21, the stability of the collecting tube 21 is improved, and the safety of the battery pack is improved.

In some embodiments, the collecting tube 21 is not in contact with the inner wall of the through hole in the adapter block 112. In this way, the heat transmitted to the crossbeam 1 through the adapter block 112 may be reduced, and the heat is prevented from being dissipated to an outside of the battery pack. However, in this way, the adapter block 112 cannot provide support for the collecting tube 21.

In some embodiments, the cooling tube 22 includes a mounting section 221 and a cooling section 222 along the width direction W, and the mounting section 221 is located in the avoidance groove 11. The mounting section 221 may be surrounded in the crossbeam 1, playing a protective role, and in the event of a collision, the possibility of damage to a mounting portion of the collecting tube 21 and the cooling tube 22 may be reduced.

After assembly, the collecting tube 21 and the mounting section 221 may be embedded into the avoidance groove 11, thus the space in the battery pack is not occupied excessively, the structure is simple, the assembly is simple, and the assembly efficiency is high. By embedding a part of the cooling assembly 2 into the avoidance groove 11, the flattening of the battery pack may be achieved, the interior space and ground clearance of the vehicle are optimized, and the battery pack obtained in this way has a compact structure, occupies a small space, and has a good lightweight effect and high safety performance.

A battery pack provided by embodiments of the present disclosure includes a battery module and a battery cooling system. The battery module includes a plurality of battery cells, and the battery cooling system is configured to cool the battery module. After the assembly, a part of the cooling assembly 2 may be embedded in the avoidance groove 11, thus, the space in the battery pack is not occupied excessively, the space occupied by the cooling assembly 2 is reduced, the structure is simple, the assembly is simple, and the assembly efficiency is high. By embedding a part of the cooling assembly 2 in the avoidance groove 11, the flattening of the battery pack may be achieved, and the interior space and ground clearance of the vehicle are optimized, so that the battery pack has a compact structure, occupies a small space, and has a good lightweight effect and high safety performance. In the battery pack provided by embodiments of the present disclosure, on the one hand, the longitudinal mounting of the liquid cooling system may be achieved, a height space of the battery pack is saved, and the contribution to the trafficability, the interior space and the comfort of the vehicle is great, and on the other hand, since the space in the battery pack is increased, the battery pack may carry more power, and there is more flexibility in vehicle model layout and range design.

In addition, because the traditional power battery liquid cooling system is usually mounted at a bottom of the battery module, it is constrained by the pressure of the battery module and the upward support force of the case in a vertical direction, and is usually fixed by positioning pins or bolts in a horizontal direction. This way will significantly occupy the space of the power battery, especially the height space, and then affects the ground clearance of the vehicle as the height space directly affects the height of the battery pack.

Based on this, in the battery pack provided by embodiments of the present disclosure, the plurality of groups of cooling tubes 22 are spaced apart from each other along the length direction L of the crossbeam 1, and the battery module is arranged between two adjacent groups of cooling tubes 22, so that the flattening of the battery pack may be realized, and the interior space and the ground clearance of the vehicle may be optimized. On the one hand, the longitudinal mounting of the liquid cooling system may be realized, the height space of the battery pack is saved by more than 10 mm, and the contribution to the trafficability, the interior space and the comfort of the vehicle is great. On the other hand, the space in the battery pack is increased, the battery pack may carry more power, and there is more flexibility in vehicle model layout and range design.

The cooling tube 22 is in contact with the side of the battery cell to improve the heat exchange area, and when the battery cell is in operation, the coolant in the cooling flow channel may play the role of heat dissipation to the battery cell, make it operate at a suitable temperature, make the operational environment of the battery cell more suitable, and prolong the service life of the battery cell. The battery cell obtained in this way has a compact structure, occupies a small space, has a good lightweight effect and has a high safety performance.

A vehicle provided by embodiments of the present disclosure includes the battery pack provided by embodiments of the present disclosure. Since the vehicle provided by embodiments of the present disclosure has the same advantages as the battery pack provided by embodiments of the present disclosure, which is not repeated herein.

In the present disclosure, unless otherwise expressly defined, terms such as "mount", "couple", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure may be understood according to the specific situations.

In the present disclosure, unless otherwise expressly defined, the first feature "below", or, "above", a second feature may include an embodiment in which the first feature is in direct contact with the second feature, or the first feature is in indirect contact with the second feature through an intermediate media. And, the first feature "above", "on", or "on top of" a second feature may include an embodiment in which the first feature is right or obliquely "above", "on", or "on top of' the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with embodiments or example is included in at least one embodiment or example of the present disclosure. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the above embodiments have been illustrated and described, it may be understood that the above embodiments are illustrative and shall not be understood as limitation to the present disclosure, and changes, modifications, alternatives and variations may be made in the above embodiments by those skilled in the art all fall within the protection scope of the present disclosure.

## Claims

1. A battery cooling system, comprising a crossbeam and a cooling assembly, wherein the crossbeam defines an avoidance groove, the avoidance groove extends in a length direction of the crossbeam, and the avoidance groove is configured to mount the cooling assembly.

2. The battery cooling system according to claim 1, wherein the cooling assembly comprises a collecting tube and at least one group of cooling tubes;
the collecting tube extends along the length direction of the crossbeam;
the cooling tube extends along a width direction, and an end of the cooling tube is in communication with the collecting tube; and
the collecting tube is arranged in the avoidance groove, and the cooling tube is coupled to the crossbeam.

3. The battery cooling system according to claim 2, wherein a mounting hole is provided in a side wall of the collecting tube, and the cooling tube is welded to the mounting hole.

4. The battery cooling system according to claim 2 or 3, wherein a plurality of cooling tubes are arranged on the collecting tube, and the cooling tubes are parallel to each other and extend along the width direction.

5. The battery cooling system according to any one of claims 2 to 4, wherein the cooling tube is a harmonica-shaped tube, an exterior of the harmonica-shaped tube is a flat plate structure, and an interior of the harmonica-shaped tube has a plurality of passages spaced apart from each other; and the passage extend along the width direction, and the plurality of passages are spaced apart from each other along a height direction.

6. The battery cooling system according to claim 5, wherein among the plurality of passages spaced apart from each other along the height direction, at least two passages are located above and at least two passages are located below, and ends of the passages located above and the passages located below away from the collecting tube are in communication with each other.

7. The battery cooling system according to any one of claims 2 to 6, wherein a support plate is provided in the avoidance groove, the support plate extends along the length direction, and the collecting tube is arranged on the support plate.

8. The battery cooling system according to any one of claims 2 to 7, wherein an adapter block is arranged in the avoidance groove, the adapter block is coupled to the crossbeam and the cooling tube, the adapter block is provided with a through hole corresponding to the collecting tube, and the collecting tube passes through the through hole.

9. The battery cooling system according to claim 8, wherein the through hole is a groove arranged in a side of the adapter block close to the collecting tube, a groove opening of the groove is opposite to the collecting tube, and the collecting tube is arranged in the groove through the groove opening of the groove.

10. The battery cooling system according to claim 9, wherein a shape of the groove is matched with a shape of a cross section of the collecting tube.

11. The battery cooling system according to any one of claims 2 to 10, wherein the cooling tube comprises a mounting section and a cooling section along the width direction, and the mounting section is located in the avoidance groove.

12. A battery pack, comprising a battery module, and a battery cooling system according to any one of claims 2-11,
wherein the battery module comprises a plurality of battery cells; and
the battery cooling system is configured to cool the battery module.

13. The battery pack according to claim 12, wherein a plurality of groups of cooling tubes are spaced apart from each other along the length direction of the crossbeam, and the battery module is arranged between two adjacent groups of cooling tubes.

14. A vehicle, comprising a battery pack according to claim 12 or 13.
